(19) Europäisches Patentamt
European Patent Office
Office européen des brevets

(11) Publication number: **0 684 291 A1**

(12) # EUROPEAN PATENT APPLICATION

(21) Application number: **95107837.7**

(22) Date of filing: **22.05.95**

(51) Int. Cl.[6]: **C09C 1/00**, C09C 1/40, C09C 3/12, C09D 5/36

(30) Priority: **24.05.94 JP 135171/94**

(43) Date of publication of application: **29.11.95 Bulletin 95/48**

(84) Designated Contracting States: **DE FR GB**

(71) Applicant: **Nippon Paint Co., Ltd.**
**1-2 Oyodokita 2-chome**
**Kita-ku,**
**Osaka-shi,**
**Osaka 531 (JP)**
Applicant: **SHISEIDO COMPANY LIMITED**
**5-5 Ginza 7-chome,**
**Chuo-ku**
**Tokyo 104-10 (JP)**

(72) Inventor: **Shiraga, Ryuich**
**A-2, 3-21-10, Shimomaruko,**
**Ohta-ku**
**Tokyo 146 (JP)**
Inventor: **Kuwajima, Teruaki**
**6-9-1-403, Hishiyanishi**
**Higashiosaka-shi,**
**Osaka 577 (JP)**
Inventor: **Hashimoto, Yukiko, c/o Shiseido Research Center(1)**
**1050, Nippa-cho,**
**Kohoku-ku**
**Yokohama-shi,**
**Kanagawa 222 (JP)**
Inventor: **Fukui, Hiroshi, c/o Shiseido Research Center (1)**
**1050, Nippa-cho,**
**Kohoku-ku**
**Yokohama-shi,**
**Kanagawa 222 (JP)**

(74) Representative: **Brehm, Hans-Peter, Dr. Dipl.-Chem.**
**Patentanwälte Kern, Brehm & Partner**
**Albert-Rosshaupter-Strasse 73**
**D-81369 München (DE)**

(54) **Mica group pigment-containing water-based coating composition.**

(57) The object of the present invention is to provide a water-based coating composition for metallic coating use which is free from the risk of blistering or swelling and has good dispersion stability insuring an attractive appearance together with sufficient water resistance.

The present invention is characterized by a mica group pigment-containing water-based coating composition comprising a mica group pigment surface-modified with an alcoholic hydroxyl group-containing silicone compound as uniformly dispersed in a water-based coating composition.

EP 0 684 291 A1

## TECHNICAL FIELD

The present invention relates to a mica group pigment-containing water-based coating composition with improved dispersion stability and water resistance useful for metallic coating of metal products such as the automotive body and architectural interior materials such as wall paper.

## PRIOR ART

Metallic coatings having a metallic gloss-imparting effect is in broad use for the coating of the automotive body, automotive parts such as the wheel and bumper, building materials such as exterior sidings, interior furnishings inclusive of wall paper, household electrical appliances, and various parts requiring a metallic gloss. Formerly, such metallic coatings were prepared by dissolving flat shaped powders of a metal such as aluminum in an organic solvent and incorporating the solution in a coating composition. However, in consideration of the potential of organic solvents to cause atmospheric pollution, their usage has become increasingly restricted in the areas where regulations for environmental pollution, such as control over VOC (volatile organic compounds), are in force.

For an increased aesthetic value of the car, its shell plate is usually subjected to a series of coating processes, viz. electrocoating, intermediate coating, coating with a metallic base coating and finally clear coating. The above metallic base coating and clear coating are generally used by the two coat, one bake method, in which a metallic base coating step is followed by a clear top coating step without interposition of a baking step and the two coats are then baked at a time. Since the two coat, one bake process offers a great advantage realizing a drastic curtailment of the coating operation, it is a mainstream of car body coating technology today.

Under the circumstances, Japanese Kokai Publication Sho-58-109566 disclosed a technology of providing a water-based coating with a metallic gloss in which titanium dioxide-coated mica flakes instead of foils of a metal such as aluminum was used and, hence, without the use of an organic solvent. This coating material disposed of the fear of violation of environmental pollution regulations and proved to be quite useful for the coating of exterior and interior sidings, window sashes, doors, rainwater troughs and other architectural materials.

However, attempts to apply the above technology to metallic base coating in the above two coat, one bake process encountered the following problems. The mica flake for use in the above technology is a scale-like material measuring about 0.2 $\mu$m thick and about 40 $\mu$m across and the base coat and clear coat formed in the two coat, one bake process are generally very thin films, namely each about 20 to 40 $\mu$m thick, therefore satisfactory finished surface appearance can be obtained when the mica flakes are critically oriented at the coating step. If the orientation of mica flakes is disordered, the flakes pierce the base coat and even the clear coat to become exposed on the surface to damage the appearance and, moreover, induces blistering and swelling of the film to further disfigure the appearance.

In order to overcome the disadvantages, it was necessary to use a dilute solution of mica flakes and remove the solvent after coating but any solvent that is compatible with this procedure is an organic solvent. Thus, the use of any aqueous solvent inevitably resulted in poor dispersibility and poor orientation of flakes due to their cohesion.

## SUMMARY OF THE INVENTION

Developed under the above circumstances, the present invention has for its object to provide a mica group pigment-containing water-based coating composition for metallic coating use which can be used as the metallic base coating for the two coat, one bake process which is a mainstream of car body coating technology today, and capable of providing both dispersion stability and water resistance which are required for a satisfactory finished appearance without blistering and swelling of the coat.

The gist of the present invention resides in the technology which comprises dispersing evenly a mica group pigment surface-modified with an alcoholic hydroxyl group-containing silicone compound to provide a mica group pigment-containing water-based coating composition.

## DETAILED DESCRIPTION OF THE INVENTION

The present invention is now described in detail.

The mica group pigment for use in the present invention is not critical in kind insofar as it is a mica group pigment. For example, mica flakes such as white mica (muscovite) flakes, black mica (biotite) flakes,

synthetic mica flakes, etc.; the corresponding mica flakes coated with a single layer or a plurality of layers of metal oxide such as $TiO_2$, ZrO, $Fe_2O_3$, $Ce_2O_3$ or $ZrO_2$; and the corresponding flakes which have been further treated with chromic acid or the like or coated with a coupling agent. Such mica group pigments are commercially available under the trade names of Iriozine (Merck), Exterior Marlin (Marl Corporation) and others.

The preferred morphology of said mica group pigment is a scales-like material with a thickness of 0.15 to 3.0 $\mu$m, a width of 5 to 150 $\mu$m, and a length of 5 to 150 $\mu$m. If the above dimensional limits are exceeded, a homogeneous coat can hardly be obtained and, therefore, such flakes are not suitable for the purposes of the present invention.

In accordance with the present invention, such a mica group pigment is surface-modified with a alcoholic hydroxyl group-containing silicone compound. This surface modification can be accomplished by coating said mica group pigment with a silicone compound having an Si-H moiety and then adding an alcoholic hydroxyl group-containing unsaturated compound to said Si-H moiety.

The above-mentioned silicone compound can be represented by the following general formula (I)

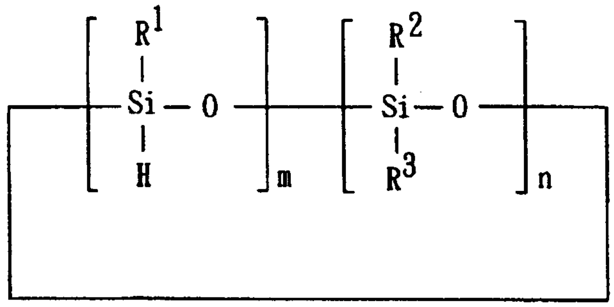

(I)

wherein $R^1$, $R^2$ and $R^3$ each represents an alkyl group or an aryl group; m represents a positive whole number and n represents 0 or a positive whole number and m and n have the relationship of $m + n = 3$ to 100.

There is no critical restriction on the above silicone compound but silicone compounds containing 2 or more hydrogen atoms per molecule are preferred. For example, dihydrohexamethylcyclotetrasiloxane, trihydropentamethylcyclotetrasiloxane, tetrahydrotetramethylcyclotetrasiloxane, dihydrooctamethylcyclopentasiloxane, trihydroheptamethylcyclopentasiloxane, tetrahydrohexamethylcyclopentasiloxane and pentahydropentamethylcyclopentasiloxane, among others, can be mentioned. These compounds can be used singly or in combination.

Coating of the mica group pigment with said silicone compound can be accomplished by polymerizing said silicone compound on the surface of said mica group pigment. This surface polymerization reaction can be easily carried out by a process which comprises dissolving said silicone compound in a solvent, dispersing said mica group pigment in the resulting solution, followed by drying the dispersion. The objective modified pigment can also be obtained by direct spraying of the above silicone compound solution against the mica group pigment and heating the solution to dry.

The above polymerization reaction can be carried out not only in liquid phase but also in gas phase. For example, one or more volatile species of the silicone compound of general formula (I) wherein $m + n = 3$ to 7 and said mica group pigment are put in independent vessels respectively and these vessels are allowed to stand in a single closed system, whereby the silicone compound is adsorbed in molecular state on the surface of the mica group pigment. The adsorbed silicone compound undergoes bridging of Si-H moieties to provide a film of the silicone resin in a network of Si-O-Si bonds.

The crosslinking of the silicone compound covering the surface of mica group pigment after the above polymerization reaction is not perfect owing to steric hindrance and other causes but the film contains residual unreacted Si-H sites. Therefore, an alcoholic hydroxyl group-containing unsaturated compound is added to the remaining Si-H sites in the presence of a catalyst, which introduces alcoholic hydroxyl groups are introduced onto the surface of the mica group pigment through these Si-C bonds.

The alcoholic hydroxyl group-containing unsaturated compound mentioned above is not particularly limited in kind only if it contains at least one unsaturated bond in the terminal or other position and, at the same time, has an alcoholic hydroxyl group. Thus, allyl alcohol and glycerol-$\alpha$ -monoallyl ether, among others, can be mentioned as examples.

A catalyst can be used in the above reaction. This catalyst is not critical in kind. Thus, compounds of platinum-group metals such as ruthenium, rhodium, palladium, osmium, iridium and platinum are preferred, and compounds of palladium or platinum are still more preferred. As said compounds of palladium, palladium(III) chloride, tetramminepalladium(II) ammonium chloride, palladium(II) oxide, palladium(II) hydroxide, etc. can be mentioned by way of example. As said compounds of platinum, platinum(II) chloride, tetrachloroplatinum(II), platinum(IV) chloride, hexachloroplatinic acid(IV), hexachloroplatinum(IV) ammonium, platinum(II) oxide, platinum(II) hydroxide, platinum(IV) dioxide, platinum(IV) oxide, platinum(IV) disulfide, platinum(IV) sulfide, potassium hexachloroplatinate(IV), etc. can be mentioned.

The addition reaction of said alcoholic hydroxyl group-containing unsaturated compound to the Si-H moiety of the silicone compound can be carried out in the per se conventional manner, i.e. by contacting the two reactants in the presence of said catalyst at 50 to 300 °C for not less than 1 hour, either in gas phase or in liquid phase.

The above reaction gives the mica group pigment surface-modified with said alcoholic hydroxyl group-containing silicone compound. The silicone compound modifying the surface of said mica group pigment can be represented by the following general formula (II)

$(R^4SiO_{3/2})_a(R^4R^5SiO)_b$ (II)

wherein $R^4$ represents a lower alkyl group; $R^5$ represents a hydroxyl group or a functional group containing a diol group; a and b each represents a positive whole number and satisfy the relation of $20 \leqq (a/(a + b)) \times 100 < 100$.

The larger the value of $(a/(a + b)) \times 100$, the greater is the network density and the lower is the potential of liberation in solvent medium. The ratio of a and b can be calculated from the infrared absorption spectrum.

The larger the number of hydroxyl groups for $R^5$, the higher is the polarity of the film and the more hydrophilic is the film.

The molecular weight of the crosslinked silicone compound of general formula (II) is preferably not less than $2 \times 10^5$. The crosslinked compound with a molecular weight not less than $2 \times 10^5$ is not dissolved by chloroform or the like so that a complete coverage can be assured.

As compounds of the above general formula (II), compounds of formula (III) and those of formula (IV) can be mentioned.

$(CH_3SiO_{3/2})_a((CH_3)(CH_2CH_2CH_2OH)SiO)_b$ (III)

$(CH_3SiO_{3/2})_a((CH_3)(CH_2CH_2CH_2OCH_2CH(OH)CH_2OH)SiO)_b$ (IV)

The mica group pigment-containing water-based coating composition of the present invention is a uniform dispersion of the mica group pigment surface-modified by said alcoholic hydroxyl groups in a water-based coating composition. The preferred concentration of said mica group pigment surface-modified by alcoholic hydroxyl groups in said water-based coating composition is generally 3 to 100 parts by weight relative to 100 parts by weight of the film-forming solid polymer, as it is the case with a solvent type metallic paint.

The water-based coating composition mentioned above contains a water-soluble or water-dispersible film-forming polymer and a crosslinking agent. The film-forming polymer mentioned above is not restricted in kind only if it is soluble or dispersible in water, thus including acrylic resin, polyester resin, alkyd resin and polyurethane resin, among others. These resins can be used singly or in combination.

Examples of the above-mentioned acrylic resin are neutralizates of acrylic resins having acid values in the range of about 50 to about 150, hydroxyl values in the range of about 20 to about 200 and number average molecular weights in the range of about 3000 to about 100000 obtained by copolymerizing a carboxyl group-containing vinyl monomer (M-1), a hydroxyl group-containing vinyl monomer (M-2) and other vinyl monomer (M-3). The resin with an acid value of less than about 10 is not soluble in water well, while the use of the resin with an acid value exceeding about 150 results in deterioration of the film properties owing to the influence of the residual carboxyl groups.

The above-mentioned carboxyl group-containing vinyl monomer (M-1) is a compound having at least one carboxyl group and one polymerizable unsaturated bond per molecule and includes acrylic acid, methacrylic acid, crotonic acid, maleic acid and itaconic acid, among others.

The above-mentioned hydroxyl group-containing vinyl monomer (M-2) is a compound having one hydroxyl group and one polymerizable unsaturated bond per molecule and this hydroxyl group acts as a

functional group reacting chiefly with the crosslinking agent. The preferred examples of such compound are monoesters of acrylic acid or methacrylic acid with dihydric alcohols of 2-10 carbon atoms, thus including 2-hydroxyethyl acrylate, 2-hydroxyethyl methacrylate, hydroxypropyl acrylate, hydroxypropyl methacrylate and so on.

The other vinyl monomer (M-3) mentioned above is a compound having one polymerizable unsaturated bond, excepting the two kinds of monomers mentioned above, and includes monoesters of acrylic acid or methacrylic acid with monohydric alcohols of 1-20 carbon atoms, such as methyl acrylate, methyl methacrylate, ethyl acrylate, ethyl methacrylate, propyl acrylate, propyl methacrylate, butyl acrylate, butyl methacrylate, 2-ethylhexyl acrylate, 2-ethylhexyl methacrylate, cyclohexyl acrylate, cyclohexyl methacrylate, lauryl acrylate, lauryl methacrylate, etc.; aromatic vinyl monomers such as styrene, methylstyrene, vinyltoluene, etc,; glycidyl group-containing vinyl monomers such as glycidyl acrylate, glycidyl methacrylate, etc.; nitrogen-containing alkyl(C1-20) (meth)acrylates such as dimethylaminoethyl acrylate, dimethylaminoethyl methacrylate, etc.; polymerizable unsaturation-containing amide compounds such as acrylamide, methacrylamide, dimethylacrylamide, N,N-dimethylpropylacrylamide, N-butoxymethylacrylamide, N-methylolacrylamide, N-methylolmethacrylamide, diacetoneacrylamide, etc.; vinyl compounds such as vinyl chloride, vinyl acetate, vinyl propionate, etc.; polymerizable unsaturation-containing nitrile compounds such as acrylonitrile, methacrylonitrile, etc.; and diene compounds such as butadiene, isoprene, etc., among others. These species of said other vinyl monomer (M-3) can be used singly or in combination.

The copolymerization of said vinyl monomers can be carried out in the known manner. The resulting acrylic resin can be neutralized with a monoamine to provide a water-soluble acrylic resin for use in the present invention.

The above-mentioned acrylic resin can be produced by emulsion polymerization in the presence of a dispersion stabilizer such as a surfactant, in which event a finely divided water-dispersible acrylic resin with an average particle diameter of 0.05 to 5.0 μm can be obtained for profitable use in the present invention. The vinyl monomers for use in this emulsion polymerization are preferably selected from among the above-mentioned species of monomer (M-1), monomer (M-2) and monomer (M-3). Where necessary, a polyvinyl compound (M-4) containing 2 or more polymerizable unsaturated bonds per molecule can be concomitantly included in a small proportion with advantage, for a water-dispersible acrylic resin with intraparticle crosslinks can then be formed for further improvements in film properties.

The polyvinyl compound (M-4) mentioned above includes ethylene glycol diacrylate, ethylene glycol dimethacrylate, triethylene glycol diacrylate, tetraethylene glycol dimethacrylate, 1,6-hexanediol diacrylate, divinylbenzene, trimethylolpropane triacrylate and so on.

The monoamine neutralizate of said water-dispersible acrylic resin can also be used in the present invention.

For use as said water-dispersible acrylic resin, a multi-layer emulsion known as a core/shell type emulsion is also useful. This emulsion is an aqueous dispersion of acrylic resin particles as stabilized in water by a stabilizing polymer. It is a core/shell type emulsion comprising a core of said particulate acrylic resin and a shell of said stabilizing polymer. Specifically, such an emulsion can be prepared by emulsion-polymerizing a vinyl monomer component not containing or substantially not containing said carboxyl group-containing vinyl monomer (M-1) in the first place and then adding a vinyl monomer component containing a large proportion of the carboxyl group-containing vinyl monomer (M-1) for further polymerization. Since this emulsion gains in viscosity when neutralized with a monoamine, it is preferable from the standpoint of coating workability, too.

The water-dispersible urethane resin that can be used in the present invention is an aqueous dispersion of self-emulsifiable polyurethane resin with an average particle size of about 0.001 to about 3.0 μm which can be obtained by a process using (a) an aliphatic or alicyclic polyisocyanate, (b) a polyol of high molecular weight, (c) an α,α-dimethylol-monocarboxylic acid, (d) either one of a chain extender and a polymerization inhibitor, and (e) a primary/secondary monoamine as components of the resin, reacting said components (a), (b) and (c), where necessary together with (d), in the presence or absence of an organic solvent by the one-shot method or the multi-stage method to give a carboxyl group-containing polyurethane resin, mixing it with water after neutralization with component (e) or in the presence of a neutralizing amount of component (e) to form a dispersion, and where necessary distilling off the solvent.

The aliphatic or alicyclic polyisocyanate for use as said component (a) is a compound having two or more isocyanate groups and an aliphatic or alicyclic hydro carbon group. Thus, for example, aliphatic diisocyanates containing 2-12 carbon atoms, e.g. hexamethylene diisocyanate (HDI), 2,2,4-trimethylhexane diisocyanate, lysine diisocyanate, etc.; alicyclic diisocyanates containing 4-18 carbon atoms, e.g. 1,4-cyclohexane diisocyanate (CDI), isophorone diisocyanate (IPDI), 4,4'-dicyclohexylmethane diisocyanate

(hydrogenated MDI), methylcyclohexane diisocyanate, isopropylidenedicyclohexyl-4,4'-diisocyanate, 1,3-diisocyanatomethyl cyclohexane (hydrogenated XDI), etc.; aromatic ring-containing aliphatic diisocyanates, e.g. xylylene diisocyanate (XDI), tetramethylxylylene diisocyanate (TMXDI), etc.; carbodiimide, uretidione-, uretoneimine-, biuret- and isocyanurate-type modification products of said diisocyanates; and mixtures of 2 or more of them. Among these compounds, HDI, IPDI, hydrogenated MDI, and TMXDI are preferred. When an aromatic polyisocyanate is used as component (a), the coat tends to undergo yellowing on baking and may also discolor on prolonged exposure to ultraviolet radiation.

The polyol of high molecular weight for use as said component (b) includes polyols obtainable by polymerizing or copolymerizing alkylene oxides, e.g. ethylene oxide, propylene oxide, butylene oxide, etc., and/or heterocyclic ethers, e.g. tetrahydrofuran, such as polyethylene glycol, polypropylene glycol, polyethylene-polypropylene (block or random) glycol, polyethylene-tetramethylene glycol (block or random), polyoxytetramethylene ether glycol, polyhexamethylene ether glycol, etc.; polyester polyols such as polyols obtainable by condensation-polymerizing an aliphatic dicarboxylic acid (e.g. succinic acid, adipic acid, sebacic acid, glutaric acid, azelaic acid) or an aromatic dicarboxylic acid (e.g. isophthalic acid, terephthalic acid) with a glycol of low molecular weight (e.g. ethylene glycol, propylene glycol, 1,4-butanediol, 1,6-hexanediol, 3-methyl-1,5-pentanediol, neopentyl glycol, 1,4-dihydroxymethylcyclohexane), such as polyethylene adipate diol, polybutylene adipate diol, polyhexamethylene adipate diol, polyneopentyl adipate diol, polyethylene/butylene adipate diol, poly-3-methylpentane adipate diol, polybutylene isophthalate diol, etc., polylactone polyols such as polycaprolactone diol or triol, poly-3-methylvalerolactone diol, etc.; polycarbonate diols such as polyhexamethylene carbonate diol; polyolefin polyols such as polybutadiene glycol or a hydrogenation product thereof; and mixtures of two or more of said polyols.

The preferred compounds, among the above-mentioned types of polyols of high molecular weight, are polyester polyols, polylactone polyols, polycarbonate polyols, mixtures of them, and mixtures of them with polyether polyols. The molecular weight of said polyol of high molecular weight is preferably 500 to 5000 and, for still better results, 1000 to 3000.

The $\alpha,\alpha$-dimethylol-monocarboxylic acid for use as said component (c) is a component used for introducing an anionic hydrophilic group for assuring a stable dispersion of polyurethane resin in water, thus including $\alpha,\alpha$-dimethylolacetic acid, $\alpha,\alpha$-dimethylolpropionic acid, $\alpha,\alpha$-dimethylolbutyric acid and so on. The preferred is $\alpha,\alpha$-dimethylolpropionic acid. The proportion of the $\alpha,\alpha$-dimethylol-monocarboxylic acid is preferably 0.3 to 5 weight % and, for still better results, 0.5 to 3 weight % in terms of carboxyl group in the urethane resin obtainable by the reaction of said components (a) to (c). If the proportion is less than 0.3 weight %, a stable emulsion is hardly obtained. On the other hand, if it exceeds 5 weight %, the polymer become too hydrophilic that the emulsion viscosity is increased and the water resistance of the coat tends to be sacrificed.

In the production of the urethane resin emulsion, a chain extender and a polymerization inhibitor, viz. said component (d), can be used where necessary. The chain extender may for example be a low molecular polyol or a polyamine. The low molecular polyol includes, among others, the glycols mentioned as the starting materials of said polyester polyols, and their low molecular alkylene oxide adducts (molecular weights less than 500); low molecular alkylene oxide adducts of bisphenols (molecular weights less than 500); trihydric alcohols such as glycerin, trimethylolethane, trimethylolpropane, etc. and their low molecular alkylene oxide adducts (molecular weights less than 500); and mixtures of two or more of them. The above-mentioned polyamine includes aliphatic polyamines such as ethylenediamine, N-hydroxyethylethylenediamine, tetramethylenediamine, hexamethylenediamine, diethylenetriamine, etc.; alicyclic polyamines such as 4,4'-diaminodicyclohexylmethane, 1,4-diaminocyclohexane, isophoronediamine, etc.; aromatic ring-containing aliphatic polyamines such as xylylenediamine, tetramethylxylylenediamine, etc; aromatic polyamines such as 4, 4'-diaminodiphenylmethane, tolylenediamine, benzidine, phenylenediamine, etc.; and mixtures of two or more of them.

The formulating amount of said chain extender is preferably 0.3 to 30 weight % and, for still better results, 0.5 to 20 weight % relative to said high molecular weight polyol component (b).

The polymerization inhibitor includes low molecular weight monohydric alcohols (e.g. methanol, butanol, cyclohexanol, etc.), monovalent alkylamines (e.g. mono- and di-ethylamine, mono- and di-butylamine, etc.), and alkanolamines (e.g. mono- and di-ethanolamine, etc.) among others.

The primary and recondary monoamines that can be used as said component (e) for neutralization of carboxyl groups include ammonia; lower alkylamines such as methylamine, ethylamine, isopropylamine, n-butylamine, dimethylamine, diethylamine, diisopropylamine, di-n-butylamine, etc.; alicyclic amines such as cyclohexylamine etc.; heterocyclic amines such as morpholine, pyridine, etc.; alkanolamines such as monoethanolamine, diethanolamine, monoisopropanolamine, diisoprapanolamine, methylethanolamine, methylisopropanolamine, etc.; and mixtures of two or more of them. The preferred are secondary

alkanolamines.

The amount of said monoamine is preferably 0.5 to 1.5 equivalents and, for still better results, 0.7 to 1.3 equivalents per 1.0 equivalent of carboxyl group.

The primary and secondary monoamines are also useful as neutralizers for said water-soluble or water-dispersible acrylic resin.

The above polyurethane resin-forming reaction is preferably conducted at a temperature of 20 to 150 ° C and, for still better results, in the range of 50 to 120 ° C . However, when an amine is used in the reaction, the reaction temperature is preferably not higher than 80 ° C and, for still better results, 0 to 70 ° C. To hasten the reaction, an amine or tin catalyst which is conventionally used in urethanation reactions can be employed. Moreover, when a solvent is used, a solvent which is water-soluble and has a boiling point not higher than the boiling point of water is particularly preferred.

The polyester resin for use in the present invention can be obtained by polycondensation reaction between a polybasic acid and a polyhydric alcohol. The polybasic acid that can be used is not critical in kind but includes a variety of acids, e.g. straight-chain dibasic acids such as oxalic acid, succinic acid, succinic anhydride, adipic acid, azelaic acid, sebacic acid, etc.; aromatic fatty acids such as phthalic acid, phthalic anhydride, isophthalic acid, terephthalic acid, tetrahydrophthalic anhydride, hexahydrophthalic acid, hexahydrophthalic anhydride, tetrabromophthalic anhydride, trimellitic acid, trimellitic anhydride, pyromellitic acid, pyromellitic anhydride, etc.; and unsaturated dibasic acids such as maleic acid, maleic anhydride, fumaric acid, itaconic acid, etc., among others.

The polyhydric alcohol mentioned above is not particularly limited in kind, either, including glycols such as ethylene glycol, propylene glycol, 1,3-butylenediol, 1,6-hexanediol, diethylene glycol, neopentyl glycol, triethylene glycol, etc.; hydrogenated bis phenol A, bisphenol dihydroxypropyl ether, glycerin, trimethylolethane, trimethylolpropane, pentaerythritol and so on.

For the purpose of adjusting the molecular weight of the above-mentioned polyester resin, a monobasic acid or a monohydric alcohol can be used in a suitable proportion in addition to the above polybasic acid and polyhydric alcohol.

The alkyd resin for use in the present invention can be obtained by the ester modification of the above-mentioned polyester with drying oil, a fatty acid or the like. The drying oil and fatty acid mentioned above typically include linseed oil, tung oil, oiticica oil, dehydrated castor oil, coconut oil, hydrogenated coconut oil, rice bran fatty acid, tung oil fatty acid, soybean oil, octyl acid and so on. The above-mentioned alkyd resin may be an expoxy-modified, rosin-modified or phenolic resin-modified resin. These resins can be produced by the known technology.

The crosslinking agent for use in the present invention is not particularly restricted in kind only if the resin component can be cured therewith. Thus, for example, methoxybutoxymethylolmelamine and other melamine resins, blocked (poly)isocyanates, epoxy resins, etc. can be mentioned. These agents can be used singly or in combination.

The preferred formulating amount of said cross linking agent is 50 to 5000 parts by weight relative to 100 parts by weight of said mica group pigment.

Where necessary, in the mica group pigment-containing water-based coating composition, the color pigment and extender pigment which are generally used in ordinary water-based coating compositions can be incorporated.

The color pigment includes inorganic color pigments, e.g. white pigments such as titanium dioxide and red/yellow pigments such as iron oxide, and organic colors such as cinncassa red, cyanine blue, carbon black and so on. The extender pigment includes clay, talc and so on. This pigment is used as dispersion pastes.

Where necessary, flaky metal or metal oxide pigments such as an aluminum pigment paste can be used.

For improved weather resistance of the coat formed from said mica group pigment-containing water-based coating composition, an ultraviolet absorber such as benzophenol compounds, a hindered amine type light stabilizer, and an antioxidant such as the phenol type can also be added. Furthermore, aside from the above additives, a surface conditioner for modulating the appearance of the coat, such as a rheology modifier, may also be incorporated.

The mica group pigment-coating water-based coating composition of the present invention can be produced by mixing the above-mentioned components evenly with stirring. The order of addition of the respective components and the conditions of addition are not particularly restricted and the conventional procedure can be utilized.

The mica group pigment-containing water-based coating composition of the present invention can be applied by the conventional coating techniques such as spray coating, brush coating, dip coating, roll

coating and flow coating.

The substrate that can be coated includes but is not limited to the shell plate of a passenger car, bus, truck, autobicycle or the like. The substrate may be of metal or of plastic material and metal substrates may have been coated with a primer or an intermediate coating.

The mica group metal-containing water-based coating composition of the present invention can be utilized with great advantage as a base coating for the two coat, one bake process. A typical coating method may comprise coating the mica group pigment-containing coating composition of the present invention in a dry film thickness of about 10 to 50 µm on a metal substrate by the air spray, airless spray, or electrostatic coating technique, drying the resulting coat by air-drying or warm-air drying until the volatile matter has been reduced to not greater than 25 weight %, preferably not greater than 15 weight %, then coating a clear paint thereon in a dry film thickness of about 15 to 70 µm by an electrostatic coating technique, and after setting in the usual manner, heating the coat at 100 to 180 °C , preferably about 120 to 160 °C for about 15 to 30 minutes to provide a cured coat.

By the above coating process, a coating film with a very satisfactory appearance and excellent water resistance and adhesion can be obtained.

For application to a plastic substrate, the substrate is degreased where necessary, then coated with a primer, and finally the above coating process described for a metal substrate is carried out. In this procedure, the temperature for curing the successive base coating and clear paint layers should be lower than the thermal deformation temperature of the plastic.

The clear paint to be coated on the coating film formed of the above water-based coating composition can be a known kind of paint. The known clear paint that can be used includes dilute solutions of aminoalkyd resin, acrylic resin, aminoacrylic resin, amino-oil free alkyd resin, silicone polyester resin, fluoro resin, urethane resin or the like in an organic solvent.

A powder clear coating material not containing an organic solvent can also be used.

The mica group pigment-containing water-based coating composition of the present invention is suitable for use as the base coating in the two coat, one bake process but can be coated independently as well.

EXAMPLES

The following examples are intended to describe the present invention in further detail and should by no means be construed as defining the scope of the invention.

Production Example 1 Surface modification of a mica group pigment

A 100L rotary double-cone reactor (stainless steel, with a warming jacket) was charged with 5 kg of an iron oxide-coated mica pigment (Exterior Marlin Super Russet, Marl Corporation). The temperature of the reactor and the 10L treating solution feed tank (stainless steel, with a warming jacket) directly connected to the reactor was maintained at 90 °C by feeding a heating medium at 90 °C to the respective warming jackets from a heating medium heater tank with a circulation pump. The treating solution feed tank was charged with 1 kg of tetramethylcyclotetrasiloxane, and nitrogen gas was bubbled through the treating solution in the feed tank at a rate of 2 L/min. The reactor was fitted with a condenser so that the nitrogen gas could be exhausted and for recovery of the unreacted treating solution. The reactor was rotated for one minute at 10-minute intervals repeatedly for mixing the iron oxide-coated mica pigment for 5 hours.

The sample withdrawn after the above treatment was confirmed by elemental analysis that the pigment had been coated with 2.5% of the silicone compound. The diffuse reflection infrared absorption spectrum showed characteristic absorptions at 1260 $cm^{-1}$ for $-CH_3$, at 2170 $cm^{-1}$ for Si-H, and 2970 $cm^{-1}$ for $-CH_3$.

One-hundred (100) grams of the silicone compound-coated mica group pigment was weighed into a 1L eggplant-shaped flask, and 10 mg of chloroplatinic acid catalyst, 10 g of glycerol-α-monoallyl ether, and 300 ml of ethanol were added. The mixture was refluxed on an oil bath at 70 °C for 5 hours. After cooling, the reaction mixture was filtered, redispersed with 300 ml of ethanol, filtered again, and deaeration-dried. The treated powder thus obtained showed a broad absorption at 3400 $cm^{-1}$ on the infrared absorption spectrum, indicating that the surface had been modified with alcoholic hydroxyl groups.

Production Example 2 Preparation of an acrylic resin varnish for water-based paint use (1)

A 1L reactor equipped with a stirrer, temperature control, and cooling jacket was charged with 76 parts by weight of ethylene glycol monobutyl ether. Then, 61 parts by weight of a monomer solution composed of 15 parts by weight of styrene, 63 parts by weight of methyl methacrylate, 48 parts by weight of 2-hydroxyethyl methacrylate, 117 parts by weight of n-butyl acrylate, 27 parts by weight of methacrylic acid, 30 parts by weight of acrylamide, and 3 parts by weight of azobisisobutyronitrile was added and the temperature was increased to 120°C under stirring. After addition of 245 parts by weight of the above monomer solution over 3 hours, the reaction system was further stirred for 1 hour. Then, 28 parts by weight of dimethylethanol amine and 200 parts by weight of deionized water were added. This procedure provided an acrylic resin varnish for water-based paint use (1) which had a nonvolatile content of 50% and a resin number average molecular weight of 12000. This varnish had a hydroxyl value of 70 and an acid value of 58.

Production Example 3 Preparation of an urethane resin varnish for water-based paint use (2)

The same equipment as used in Production Example 2 was charged with 40.2 parts by weight of dimethylol propionic acid, 30 parts by weight of triethylamine, and 402 parts by weight of N-methylpyrrolidone and the mixture was heated at 90°C for dissolution. Then, 290 parts by weight of isophorone diisocyanate, 400 parts by weight of polycarbonate diol (Placcel CD-211 PL, number average molecular weight 1000, Daicel Chemical) and 600 parts by weight of polypropylene glycol (mol. wt. 2000) were added and, after 10 minutes' stirring, 1.3 parts by weight of dibutyltin dilaurate was further added. Thereafter, the temperature was increased to 95°C and the reaction was conducted at that temperature for 1 hour to provide an urethane prepolymer.

Then, the same equipment as used in Production Example 2 was charged with 2293 parts by weight of deionized water and 11.5 parts by weight of hydrazin hydrate and the above urethane prepolymer was added with stirring. The solid fraction of the resulting urethane resin varnish (2) for water-based paint use showed an acid value of 16.0. The nonvolatile matter accounted for 33%.

Example 1 Preparation of a mica group pigment-containing water-based coating composition (1)

Ten (10) parts by weight of the mica group pigment surface-modified with an alcoholic hydroxyl group-containing silicone compound as obtained in Production Example 1 was dispersed in 112 parts by weight of the acrylic resin varnish for water-based paint use (1) as obtained in Production Example 2. Then, 43 parts by weight of the urethane resin varnish for water-based paint use (2) as obtained in Production Example 3 was uniformly dispersed, followed by addition of 50 parts by weight of Uvan 20SE-60 (Mitsui Toatsu Chemicals) as a curing agent. The mixture was stirred uniformly to provide a mica group pigment-containing water-based coating composition (1) of the present invention.

Example 2 Preparation of a mica group pigment-containing water-based coating composition (2)

A mica group pigment-containing water-based coating composition (2) was prepared by the same procedure as Example 1 except that 30 parts by weight of methyl ethyl ketone-blocked isophorone diisocyanate was used as the curing agent instead of Uvan 20SE-60 (Mitsui Toatsu Chemicals).

Comparative Example 1 Preparation of a mica group pigment -containing water-based coating composition (3)

A mica group pigment-containing water-based coating composition (3) was prepared by the same procedure as Example 1 except that 10 parts by weight of the iron oxide-coated mica pigment prior to surface modification was used instead of 10 parts by weight of the surface-modified mica group pigment.

Production Example 4 Preparation of a clear paint (1)

1) Preparation of an acrylic resin varnish for clear paint use (1)

A reactor equipped with a stirrer, temperature control and reflux condenser was charged with 70 parts by weight of xylene and 20 parts by weight of n-butanol. Then, a portion, viz. 20 parts by weight, of the following formulation was added and the temperature was increased under constant stirring.

| | |
|---|---|
| Methacrylic acid | 1.2 Parts by weight |
| Styrene | 26.4 Parts by weight |
| Methyl methacrylate | 26.4 Parts by weight |
| n-Butyl acrylate | 36.0 Parts by weight |
| 2-Hydroxyethyl methacrylate | 10.0 Parts by weight |
| Azobisisobutyronitrile | 1.0 Parts by weight |

Then, at the reflux temperature, the balance of the above formulation, viz. 81.0 parts by weight, was added dropwise over 2 hours. Thereafter, a solution composed of 0.3 part by weight of azobisisobutyronitrile and 10 parts by weight of xylene was added dropwise over 30 minutes. The reaction mixture was further refluxed for 2 hours to complete the reaction. The above procedure provided an acrylic resin varnish with a nonvolatile content of 50% and a number average molecular weight of 8000. Its hydroxyl value was 48.

2) Preparation of a resin powder dispersion for clear paint use

A 2L flask equipped with a stirrer, nitrogen gas inlet pipe, temperature control, reflux condenser and decanter was charged with 184 parts by weight of bishydroxyethyltaurine, 180 parts by weight of neopentyl glycol, 236 parts by weight of azelaic acid, 186 parts by weight of phthalic anhydride, and 27 parts by weight of xylene and the temperature was increased. The byproduct water was azeotropically removed with xylene. The temperature was increased to 190°C over about 2 hours after the beginning of refluxing and the stirring and removal of water were continued until the carboxylic acid-equivalent acid value of 145 was reached. The reaction mixture was then cooled to 140°C . While this temperature of 140°C was maintained, 314 parts by weight of Cardura E10 (glycidyl versatate, Shell) was added dropwise over 30 minutes, after which the stirring was continued for 2 hours to complete the reaction. The resulting polyester resin had an acid value of 59, a hydroxyl value of 90, and a number average molecular weight of 1054.

Then, a 1L reactor equipped with a stirrer, temperature control and reflux condenser was charged with 282 parts by weight of deionized water, 10 parts by weight of the polyester resin prepared above, and 0.75 part by weight of dimethanolamine and the mixture was stirred at a constant temperature of 80°C for dissolution. Then, a solution prepared by dissolving 45 parts by weight of azobiscyanovaleri c acid in a mixture of 45 parts by weight of deionized water and 4.3 parts by weight of dimethylethanolamine was added to the above solution. Thereafter, a solution composed of 70.7 parts by weight of methyl methacrylate, 94.2 parts by weight of n-butyl acrylate, 70.7 parts by weight of styrene, 30 parts by weight of 2-hydroxyethyl acrylate, and 4.5 parts by weight of ethylene glycol dimethacrylate was added dropwise over 60 minutes. After this dropwise addition, a solution prepared by dissolving 1.5 parts by weight of azobiscyanovaleric acid in a mixture of 15 parts by weight of deionized water and 1.4 parts by weight of dimethylethanolamine was further added and the mixture was stirred at 80°C for 60 minutes. As a result, an emulsion having a nonvolatile content of 45%, pH 7.2, a viscosity of 92 cps (25°C) and a particle diameter of 0.156 µm was obtained. This emulsion was dehydrated by spray drying and the resulting resin powder was redispersed in 200 parts by weight of xylene relative to 100 parts by weight of resin to provide a xylene dispersion of resin powder for clear paint use. The particle diameter was 0.8 µm.

3) Preparation of a clear paint (1)

The above acrylic resin varnish for clear paint use (1), resin powder dispersion for clear paint use, Uvan 20SE-60 (Mitsui Toatsu Chemicals) and Modaflow (Monsanto) were taken, each in the amount indicated below, into a stainless steel vessel and stirred to provide a clear paint (1).

| | |
|---|---|
| Varnish (1) | 100 Parts by weight |
| Resin powder dispersion for clear paint use | 2.2 Parts by weight |
| Uvan 20SE-60 | 36 Parts by weight |
| Modaflow | 0.5 Parts by weight |

Production Example 5 Preparation of a clear paint (2)

1) Preparation of an acrylic resin varnish for clear paint use (2)

The same equipment as used in Production Example 4 was charged with 57 parts by weight of xylene and 6 parts by weight of n-butanol. Then, a portion, viz. 20 parts by weight, of the following formulation was added and heated with stirring.

| | |
|---|---|
| Styrene | 30.0 Parts by weight |
| Ethylhexyl methacrylate | 15.2 Parts by weight |
| Ethylhexyl acrylate | 5.5 Parts by weight |
| 2-Hydroxyethyl methacrylate | 16.2 Parts by weight |
| Methacrylic acid | 3.1 Parts by weight |
| Azobisisobutyronitrile | 4.0 Parts by weight |

At the reflux temperature, the balance of the above formulation, viz. 84 parts by weight, was added dropwise over 2 hours. Then, a solution composed of 0.5 part by weight of azobisisobutyronitrile, 23 parts by weight of xylene and 14 parts by weight of n-butanol was added dropwise over 20 minutes. The reaction mixture was further refluxed for 2 hours to provide an acrylic resin varnish for clear paint use (2) which had a nonvolatile content of 50% and a number average molecular weight of 3400.

2) Preparation of a clear paint (2)

The above acrylic resin varnish for clear paint use (2) and Desmodur N-75 were taken, each in the amount shown below, into a stainless steel vessel and mixed by stirring to provide a clear paint (2).

| | |
|---|---|
| Varnish (2) | 100 Parts by weight |
| Desmodur N-75 | 16.7 Parts by weight |

Coating Example 1

In an environment of 23°C and 85% RH, an intermediate-coated steel sheet was spray-coated with the mica group pigment-containing water-based coating composition (1) in two stages at a 1-minute interval in a dry film thickness of 20 µm and, then, preheated at 80°C for 2 minutes. On top of this coat, the clear paint (1) was coated in one stage in a dry thickness of 30 µm and set for 7 minutes. The coated steel sheet was put in an oven and baked at 130°C for 30 minutes.

The above intermediate-coated steel sheet was a polished mild steel sheet chemically degreased, coated with an automotive electrocoating composition and an intermediate coating in a coating production line, and baked.

Evaluation of coating film

1. Film appearance

The appearance of the coat was visually inspected and evaluated according to the following criteria. The results are shown in Table 1.

O : Normal
X : Mica peaking out on the film surface

2. Water resistance

The coated sheet was immersed in water at 40°C for 10 days and the coat surface was inspected and evaluated according to the following criteria. The results are shown in Table 1.

O : No change
X : Blisters observed in coating film

Coating Example 2

In the same manner as Coating Example 1, an intermediate-coated steel sheet was coated with mica group pigment-containing water-based coating composition (2) and clear paint (1) in succession and the resulting coat was evaluated. The results of evaluation are shown in Table 1.

Coating Example 3

In the same manner as Coating Example 1, an intermediate-coated steel sheet was coated with mica group pigment-containing water-based coating composition (1) and clear paint (2) in succession and the resulting coat was evaluated. The results of evaluation are shown in Table 1.

Coating Example 4

In the same manner as Coating Example 1, an intermediate-coated steel sheet was coated with mica group pigment-containing water-based coating composition (2) and clear paint (2) in succession and the resulting coat was evaluated. The results of evaluation are shown in Table 1.

Coating Example 5

In the same manner as coating Example 1, an intermediate-coated steel sheet was coated with mica group pigment-containing water-based coating composition (3) and clear paint (1) in succession and the resulting coat was evaluated. The results of evaluation are shown in Table 1.

Coating Example 6

In the same manner as Coating Example 1, an intermediate-coated steel sheet was coated with mica group pigment-containing water-based coating composition (3) and clear paint (2) in succession and the resulting coat was evaluated. The results of evaluation are shown in Table 1.

Table 1

| Coating examples | Mica group pigment-containing water-based coating composition Film thickness (μm) | | | Clear coating Film thickness (μm) | | Appearance of coat | Water resistance |
|---|---|---|---|---|---|---|---|
| | (1) | (2) | (3) | (1) | (2) | | |
| 1 | 20 | — | — | 30 | — | ○ | ○ |
| 2 | — | 20 | — | 30 | — | ○ | ○ |
| 3 | 20 | — | — | — | 30 | ○ | ○ |
| 4 | — | 20 | — | — | 30 | ○ | ○ |
| 5 | — | — | 20 | 30 | — | × | × |
| 6 | — | — | 20 | — | 30 | × | × |

The mica group pigment surface-modified with an alcoholic hydroxyl group-containing silicone compound according to the present invention has a high affinity for aqueous binders and disperses evenly so that it provides for a metallic coat with good appearance and excellent water resistance and adhesion.

## Claims

1. A mica group pigment-containing water-based coating composition characterized in that a mica group pigment surface-modified with an alcoholic hydroxyl group-containing silicone compound is uniformly dispersed in a water-based coating composition.

2. The mica group pigment-containing water-based coating composition according to claim 1 wherein said water-based coating composition is a composition comprising at least one water-soluble or water-dispersible film-forming polymer selected from the group consisting of acrylic resin, polyester resin, alkyd resin and polyurethane resin and a crosslinking agent.

3. The mica group pigment-containing water-based coating composition according to claim 1 or 2 wherein said mica group pigment is in the form of flakes 0.15 to 3.0 $\mu$m thick, 5 to 150 $\mu$m wide, and 5 to 150 $\mu$m long.

4. The mica group pigment-containing water-based coating composition according to claim 1, 2 or 3 wherein said alcoholic hydroxyl group is a hydroxyl group derived from allyl alcohol or glycerol-$\alpha$-monoallyl ether.

5. A two coat one bake coating method in which the mica group pigment-containing water-based coating composition according to claim 1 is used as a base coating and a solvent-type clear coating or a powder clear coating is used as a top coating.

European Patent Office

# EUROPEAN SEARCH REPORT

Application Number
EP 95 10 7837

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 212 870 (SHISEIDO COMPANY)<br>* page 37, line 35 - page 38, line 3 *<br>* page 36, line 35 - page 37, line 3 *<br>* page 27, line 36 - page 28, line 5 *<br>* examples 6-1,10-2,10-5 *<br>* examples 10-6,10-7 *<br>* examples 10-8,10-11 *<br>* examples 12-2 *<br>--- | 1-4 | C09C1/00<br>C09C1/40<br>C09C3/12<br>C09D5/36 |
| X | DATABASE WPI<br>Week 8923<br>Derwent Publications Ltd., London, GB;<br>AN 89-169347<br>& JP-A-01 110 540 (SHISEIDO) , 27 April 1989<br>* abstract *<br>--- | 1 | |
| X | EP-A-0 513 814 (KANSAI PAINT CO.)<br>* page 5, line 31 - line 57 *<br>* page 6, line 53 - line 58 *<br>* page 7, line 28 - line 30 *<br>--- | 1,2,5 | TECHNICAL FIELDS SEARCHED (Int.Cl.6) |
| A | DATABASE WPI<br>Week 9138<br>Derwent Publications Ltd., London, GB;<br>AN 91-277600<br>& JP-A-03 183 504 (SHISEIDO) , 9 August 1991<br>* abstract *<br>--- | 1 | C09C<br>C09D |
| A | DE-A-20 17 317 (I. C. I.)<br>----- | | |

The present search report has been drawn up for all claims

| Place of search | Date of completion of the search | Examiner |
|---|---|---|
| THE HAGUE | 8 September 1995 | Van Bellingen, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document